# EUROPÄISCHE PATENTSCHRIFT

(11) **EP 0 583 859 B1**
(45) Veröffentlichungstag und Bekanntmachung des Hinweises auf die Patenterteilung: **05.02.1997**
(21) Anmeldenummer: 93250228.9
(22) Anmeldetag: 19.08.1993
(51) Int. Cl.: B65G 47/82

(54) **Gerät zum Entnehmen eines Artikels aus einem Tablar eines Regallagers**
Apparatus for taking an article from a shelf store plate
Appareil pour prélever un article d'une plaque de rayonnage

(30) Priorität: 20.08.1992 DE 9211139 U
(43) Veröffentlichungstag der Anmeldung: 23.02.1994
(73) Patentinhaber: MANNESMANN Aktiengesellschaft, 40213 Düsseldorf (DE); Christ, Ferdinand, Dipl.-Ing., D-67808 Weitersweiler (DE)
(72) Erfinder: Christ, Ferdinand, D-67808 Weitersweiler (DE); Müller, Wolfgang, D-63069 Offenbach (DE)
(74) Vertreter: Meissner, Peter E., Dipl.-Ing.

(56) Entgegenhaltungen:
- DD-A- 143 588
- DE-C- 4 023 290

## Beschreibung

Die Erfindung betrifft ein Gerät zum Entnehmen wenigstens eines Artikels aus einem Tablar gemäß dem Oberbegriffs des Anspruchs 1.

Ein ähnliches Gerät ist Gegenstand der älteren deutschen Patentanmeldung P 41 43 282.7. Dieses bekannte Gerät hat sich an und für sich bewährt, insbesondere weil durch die kammartige Hebevorrichtung der betreffende Artikel, im allgemeinen ein quaderförmiger Behälter, auf die Ebene des umlaufenden Randes des Tablars angehoben und von dort abgeschoben werden kann.

Bei dem in der erwähnten Patentanmeldung beschriebenen Gerät ist die kammartige Hebevorrichtung gehäusefest angeordnet, d.h. sie ist nur in lotrechter Richtung zum Anheben bzw. Absenken der Artikel beweglich. Damit ist aber der Nachteil verbunden, daß die Fördergeschwindigkeit begrenzt ist. Man muß nämlich abwarten, bis die Hebevorrichtung abgesenkt ist, ehe ein anderer Artikel mit ihrer Hilfe angehoben und abgefördert werden kann.

Des weiteren ist aus der DE 40 23 290 C1 eine Anlage zum Engobieren und Glasieren von Dachziegeln mit einer Fördervorrichtung für die Dachziegel bekannt. Für den Fördervorgang sind die Dachziegel auf als Transportbehälter dienenden Keramikrähmchen gelagert, von denen die Dachziegel für den Engobier- oder Glasiervorgang angehoben und hiernach wieder auf den Keramikrähmchen abgesetzt werden. Dieser Anhebe- und Absenkvorgang erfolgt mittels einer kammerartigen Hebevorrichtung, die mit der Transportgeschwindigkeit der Dachziegel mitläuft und in die Keramikrähmchen einfahrbare Rechen für die Hubbewegung vorsieht. Die Anordnung eines zusätzlichen Querförderers zur Trennung der Dachziegel von den Keramikrähmchen und deren Weitertransport auf einen angrenzenden Förderer ist nicht vorgesehen.

Ferner ist aus der DE 41 02 654 C2 eine Be- und Entladevorrichtung für wannenförmige Tablare bekannt, die in ihren Böden Schlitze aufweisen, durch die Zinken von unten zum Anheben der Stückgüter von dem Boden des Tablars einfahrbar sind. Die Zinken sind an einem taktgesteuerten Kettenumlaufförderer angeordnet, so daß die Zinken während der Förderbewegung der Tablare von unten durch die Schlitze eingefahren werden können. An dem Kettenumlaufförderer grenzt ein Querförderer an, um das Stückgut während der Förderbewegung der Tablare von den angehobenen Zinken auf einen angrenzenden Förderer leiten zu können.

Dies entspricht dem Oberbegriff des Anspruchs 1. Für den Querfördervorgang ist hier erforderlich, daß das Stückgut vollständig über den Rand des Tablars hinaus angehoben wird. Ausgehend von einem Gerät mit den Merkmalen des Oberbegriffs von Patentanspruch 1 liegt daher der Erfindung die Aufgabe zugrunde, dieses so auszugestalten, daß eine sichere und schnelle Entnahme ermöglicht wird.

Zur Lösung dieser Aufgabe ist die Erfindung durch die Merkmale des Anspruchs 1 gekennzeichnet.

Durch diese Maßnahmen wird die Erfindungsaufgabe gelöst, weil die betreffenden Artikel nicht mehr vollständig über den Rand des Tablars angehoben werden müssen, sondern nur noch sich im Tablar befindend leicht gekippt werden. Durch die spezielle Ausbildung der Zinken, die eine schräge Transportfläche bilden, wird vermieden, daß Artikel mit unebener Oberfläche, z.B. verschnürte Pakete, beim Abschieben sich an den Zinken verfangen oder von diesen beschädigt werden.

Bevorzugt wird es, wenn die Zinken an einem angetriebenen endlosen Band befestigt sind, das mit dem oberen Trum des endlosen Bandes in Transportrichtung einen ansteigenden Abschnitt, daran anschließend einen waagerechten Abschnitt und daran anschließend einen abfallenden Abschnitt aufweist. Dadurch wird auf konstruktiv einfache Weise erreicht, daß die Hebevorrichtung kontinuierlich arbeiten kann. Die Zinken der Hebevorrichtung treten also von unten durch die entsprechenden Öffnungen der Tablare in die Tablare ein und heben den betreffenden Artikel an, wobei sie mit der Geschwindigkeit der Tablare mitlaufen. Am Ende der Anhebebewegung, wenn die Artikel also abgefördert sind, werden die angehobenen Zinken im abfallenden Abschnitt des endlosen Bandes wieder nach unten gefördert und sie kehren dann wieder zum Anfang zurück, d.h. zum ansteigenden Abschnitt des endlosen Bandes.

Insoweit wird es auch bevorzugt, wenn die Zinken das Band lückenlos besetzen. Man braucht hierbei nicht mehr so genau auf die Synchronisierung der beiden Bewegungen zu achten, weil stets entsprechende Zinken vorhanden sind, die durch die Öffnungen im Boden des Tablars hindurchtreten. Grundsätzlich möglich ist aber auch eine andere Ausführungsform, bei der die Zinken gruppenweise angeordnet sind und jede Gruppe einem der Tablare zugeordnet werden muß.

Die Erfindung wird im folgenden anhand von Ausführungsbeispielen näher erläutert. Es zeigt:
- Fig. 1 -: eine teilweise geschnittene Seitenansicht der wesentlichen Bauelemente eines erfindungsgemäßen Geräts;
- Fig. 2 -: eine Draufsicht auf Fig. 1;
- Fig. 3 -: eine Ansicht des Behälters aus der Abschieberichtung;
- Fig. 4 -: eine demgegenüber abgeänderte Ausführungsform, ebenfalls in einer schematischen Seitenansicht;
- Fig. 5 -: eine Ansicht in Pfeilrichtung A von Fig. 4.

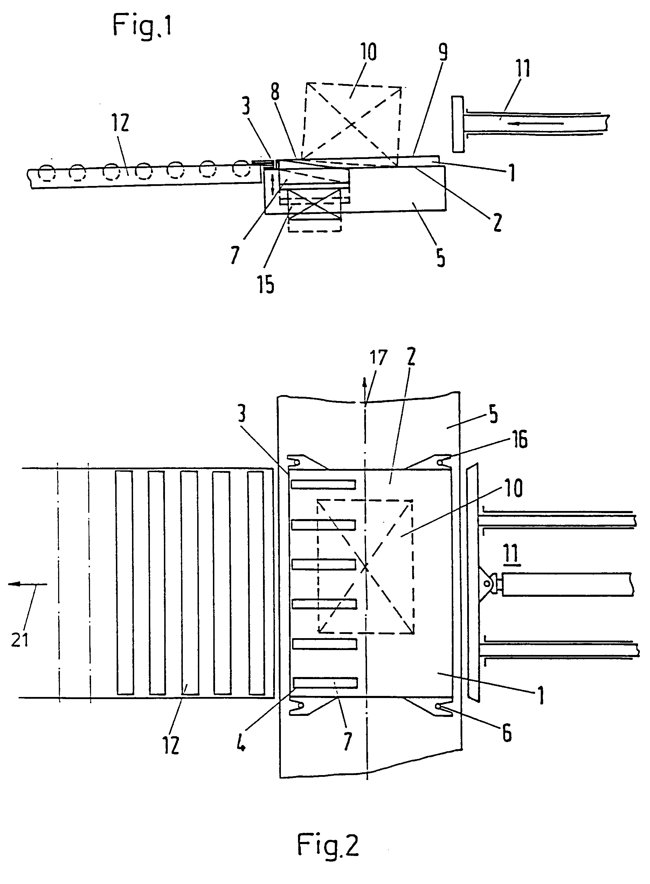

Fig. 1 zeigt eine Seitenansicht einer schematischen Darstellung eines erfindungsgemäßen Geräts mit einem Tablar 1 zum Transport von Fördergut. Das Tablar 1 besteht aus einem ebenen und rechteckigen Boden 2, der von einem an diese anschließenden und erhöhten Rand 3 umrandet wird. In dem Boden 2, unmittelbar an einem in Längsrichtung des Tablars 1 verlaufenden Rand 3 angrenzend, sind Aussparungen 4 (s. Fig. 2) angeordnet. Das Tablar 1 ruht auf einer Aufnahmevorrichtung 5, auf die es z.B. von dem Hubtisch eines nicht dargestellten Regalbediengerätes gefördert wurde.

Zum Einleiten des Entladevorganges wird in den Boden 2 des Behälters 1 ein den Aussparungen 4 angepaßter Profilkörper 7 (Hebevorrichtung) mittels einer Hubvorrichtung 15 von unten vertikal eingefahren. Hierdurch wird der sonst rechtwiklige Übergang von dem Boden 2 zu dem Rand 3 zu einer als schiefe Ebene ausgebildeten Transportfläche 8 überbrückt und das Fördergut 10 teilweise von den Profilkörpern 7 angehoben, wobei der andere Teil des Förderguts 10 noch auf dem Boden ruht. Befindet sich der Profilkörper 7 in der Abschiebeposition, d.h. der Profilkörper 7 ist mindestens auf gleicher Höhe mit der Oberkante 9 des Randes 3, so wird das Fördergut 10 von einer neben der Aufnahmevorrichtung 5 angeordneten Vorrichtung 11 zum seitlichen Abschieben des Fördergutes 10 seitlich auf einen an die Aufnahmevorrichtung 5 anschließenden als Rollenbahn ausgebildeten Förderer 12 übergeben.

In Fig.2 ist eine Draufsicht auf das erfindungsgemäße Gerät mit dem Tablar 1 dargestellt. Es ist ersichtlich, daß die Aussparungen 4 im Boden 2 des Tablars 1 jeweils rechteckig ausgerichtet und untereinander beabstandet sind, mit ihrer Längserstreckung zu dem Rand 3, über den das Fördergut 10 abgeschoben wird, so daß sie in dem Boden 2 des Behälters 1 entlang des Randes 3 einer leiterartig ausgebildeten Bereich bilden. Das Tablar 1 ist über vier als Bolzen ausgebildete Zentrierelemente 6 auf die Übergabeposition, in der die Profilkörper 7 störungsfrei einfahren können, ausrichtbar. Die Zentrierelemente 6 sind in seitlich im Bereich der vier Ecken an das Tablar 1 angeordnete, einseitig offene, trichterförmige Nuten 16 einfahrbar.

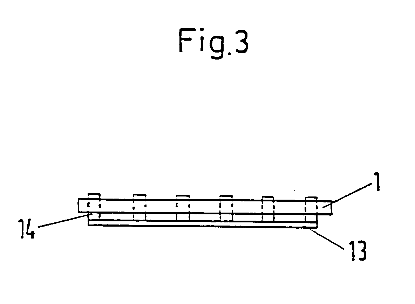

In Fig. 3 ist eine Seitenansicht des Tablars 1 mit eingefahrenem Profilkörper 7 dargestellt. Der Profilkörper 7 besteht aus einer Grundplatte 13, mit der sechs Platten 14 in Form von rechtwikligen Dreiecken verbunden sind, wobei die Platten 14 rechtwinklig zur Grundplatte und parallel zueinander angeordnet und voneinander beabstandet sind. Der so ausgebildete Profilkörper 7 ist vergleichbar mit einem Kamm oder einem Rechen.

Die Erfindung ist zwar anhand eines Tablars mit Aussparungen entlang nur eines Randes beschrieben, jedoch ist auch die Anordnung der Aussparungen an den jeweils gegenüberliegenden Rändern, um ein Abschieben in zwei Richtungen zu gewährleisten, möglich.

Bei der vorstehend anhand der Fig. 1 bis 3 beschriebenen Ausführungsform ist ein geeigneter Antrieb vorgesehen, der sicherstellt, daß die Tablare 1 in Richtung des Pfeiles 17 transportiert werden und synchron damit wird die kammartige Hebevorrichtung 7 in Richtung des Pfeiles 17 bewegt.

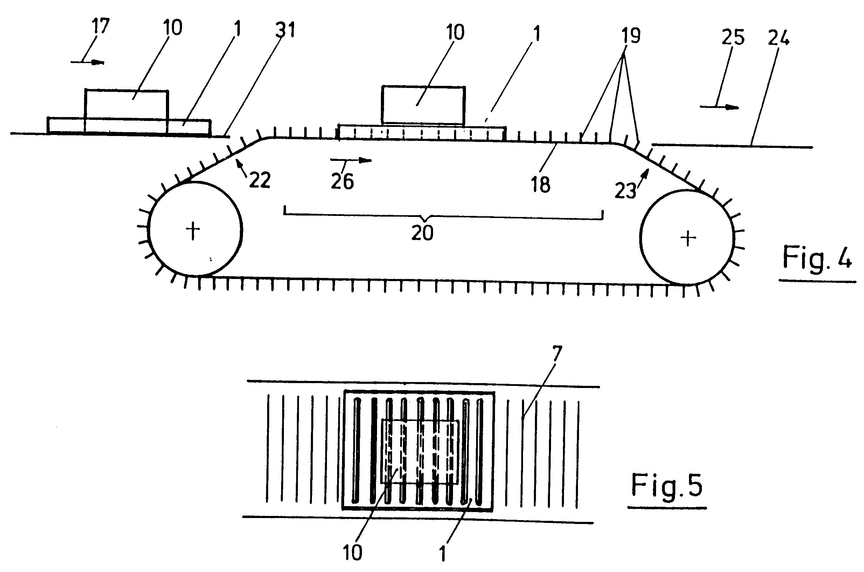

Hierfür zeigt Fig. 4 eine bevorzugte Ausführungsform, wobei ein endloses Band 18 mit kammartigen Zinken 19 vorgesehen ist, das in Richtung des Pfeiles 26 umläuft. Die Tablare 1 werden in Richtung des Pfeiles 17 mit den Artikeln 10 längs eines ersten Förderbandes 31 transportiert und gelangen dann zu einem waagerechten Abschnitt 20 am oberen Trum des endlosen Bandes 18. Dort greifen die Zinken 19 durch die Aussparungen 4 im Boden der Tablare 1 und heben den Artikel 10 an, so daß er in Richtung des Pfeiles 21 (vgl. Fig. 2) abgefördert werden kann.

Zu diesem Zweck hat das endlose Förderband zusätzlich zu dem waagerechten Abschnitt 20 also einen ansteigenden Abschnitt 22 und einen abfallenden Abschnitt 23.

Die leeren Tablare werden dann über ein weiteres Förderband 24 in Richtung des Pfeiles 25 abgefördert.

## Patentansprüche

1. Gerät zum Entnehmen wenigstens eines Artikels aus einem Tablar (1), das längs eines vorbestimmten Wegs gefördert wird, mit einer kammartigen und mit der Transportgeschwindigkeit der Tablare (1) mitlaufenden Hebevorrichtung (7) mit von unten durch Aussparungen (4) im Boden (2) des Tablars (1) einfahrbaren Zinken (19), über deren obere Kanten bei angehobenen Zinken (19) der Artikel mit Hilfe eines Querförderers auf einen angrenzenden Förderer (12) förderbar ist,
dadurch gekennzeichnet,
daß die oberen Kanten der Zinken (19) im angehobenen Zustand ausgehend von dem Boden (2) zu dem Rand (3) des Tablars (1) ansteigen, der dem angrenzenden Förderer (12) benachbart ist und der Querförderer als Vorrichtung zum seitlichen Abschieben (11) des Artikels über den Rand (3) des Tablars (1) ausgebildet ist.

2. Gerät nach Anspruch 1,
**dadurch gekennzeichnet**,
daß die Zinken (19) an einem angetriebenen endlosen Band (18) befestigt sind, das am oberen Trum des endlosen Bandes in Transportrichtung einen ansteigenden Abschnitt (22), daran anschließend einen waagerechten Abschnitt (20) und daran anschließend einen abfallenden Abschnitt (23) aufweist.

3. Gerät nach Anspruch 2,
**dadurch gekennzeichnet**,
daß die Zinken (19) das Band (18) lückenlos besetzen.

## Claims

1. An apparatus for removing at least one article from a plate (1) which is conveyed along a predetermined path, with a comb-like lifting device (7) which runs along at the speed of conveyance of the plates (1) with prongs (19) which can be introduced from below through recesses (4) in the base (2) of the plate (1), across the upper edges of which when the prongs (19) are raised the article can be conveyed with the aid of a cross-conveyor on to an adjoining conveyor (12),
characterised in that the upper edges of the prongs (19), in the raised state, ascend starting from the base (2) to the edge (3) of the plate (1) which is adjacent to the adjoining conveyor (12) and the cross-conveyor is designed as a device for laterally pushing off (11) the article across the edge (3) of the plate (1).

2. An apparatus according to Claim 1, characterised in that the prongs (19) are attached to a driven endless belt (18) which has on the upper run of the endless belt in the direction of conveyance an ascending section (22), adjoining this a horizontal section (20) and adjoining that a descending section (23).

3. An apparatus according to Claim 2, characterised in that the prongs (19) occupy the belt (18) completely.

## Revendications

1. Appareil pour prélever au moins un article d'une tablette (1), qui est transportée le long d'une voie prédéterminée, comportant un dispositif de levage (7) en forme de peigne et tournant à la vitesse de transport des tablettes (1), ayant des dents (19) pouvant être introduites, du bas, à travers des évidements (4) dans le fond (2) de la tablette (1), sur les arêtes supérieures desquelles, lorsque les dents (19) sont soulevées, l'article peut être transporté, à l'aide d'un transporteur transversal, sur un transporteur adjacent (12),
caractérisé en ce que les arêtes supérieures des dents (19), dans l'état soulevé, s'élèvent à partir du fond (2) vers le bord (3) de la tablette (1), qui est voisin du transporteur adjacent (12), et le transporteur transversal est réalisé comme dispositif pour évacuer latéralement (11) l'article au-dessus du bord (3) de la tablette (1).

2. Appareil selon la revendication 1,
caractérisé en ce que les dents (19) sont fixées à une bande sans fin entraînée (18), qui, sur le brin supérieur de la bande sans fin, dans la direction de transport, présente un tronçon ascendant (22), un tronçon horizontal s'y raccordant (20), et un tronçon descendant s'y raccordant (23).

3. Appareil selon la revendication 2,
caractérisé en ce que les dents (19) occupent la bande (18) sans vides.
